# EUROPEAN PATENT APPLICATION

(11) **EP 2 031 259 A2**
(43) Date of publication of application: **04.03.2009**
(21) Application number: 08015220.0
(22) Date of filing: 28.08.2008
(51) Int. Cl.: F16C 33/38, F16C 33/66

(54) **Cage for rolling bearing**

(30) Priority: 31.08.2007 JP 2007225641
(71) Applicant: JTEKT Corporation, Osaka-shi Osaka 542-8502 (JP)
(72) Inventor: Tachi, Hiroshi, Osaka-shi, Osaka 542-8502 (JP); Kotani, Kazuyuki, Osaka-shi, Osaka 542-8502 (JP); Nakano, Shusuke, Osaka-shi, Osaka 542-8502 (JP)
(74) Representative: Weber, Joachim

(57) **Abstract**

A cage of the invention is equipped with a first annular portion 21 and a second annular portion 22 that are disposed respectively at both ends in an axial direction, and a plurality of columns 26 which couples the first annular portion 21 and the second annular portion 22 to each other, and which forms a plurality of pockets 25 in which rolling elements 18 are accommodated. The cage is composed of a first body portion 30 and a second body portion 35 that are arranged in the axial direction of the bearing and that are coupled to each other via interlocking columns provided on each of the first and second body portions. At least one of the first body portion 30 and the second body portion 35 has an outer diameter face having recessed therein an oil groove 40 whose base end leads to a corresponding pocket 25.

## Description

### BACKGROUND OF THE INVENTION

### 1. Field of the Invention

The invention relates to a cage for a rolling bearing.

### 2. Description of the Related Art

Cages used for a rolling bearing, such as a ball bearing, a roller bearing or the like, include single-sided holding cages, which are also referred to as crown type cages. Other bearing cages, include double-sided holding type (division-type) cages, which include a first annular portion and a second annular portion, both of which are disposed respectively at both ends in an axial direction of the cage, and a plurality of columns that couples the first annular portion and the second annular portion to each other and that forms a plurality of pockets in which rolling elements are accommodated. This cage is composed of a first body portion and a second body that are arranged in the axial direction of the bearing. The first body portion is coupled to the second body portion via interlocking columns provided on each of the first and second body portions (e.g., see Japanese Patent Application Publication No. 2006-292097 (JP-A-2006-292097)).

A single-sided cage exhibits low holding rigidity for the rolling elements, and may be easily deformed by centrifugal force during high-speed rotation, and thus is not suitable in applications where high-speed rotation is likely. That is, if the cage is deformed by a centrifugal force during high-speed rotation, part of a deformed portion of the cage may interfere with the rolling elements and thereby increase rotational resistance or increase the likelihood that the bearing will seize. In contrast, double-sided bearing cages exhibits higher rigidity for the rolling elements than single-sided bearing cages, and is less easily deformed by centrifugal force during high-speed rotation, and is therefore well suited for high-speed rotation applications. In the double-sided holding cage, however, lubricating oil tends to accumulate in the pockets, and the agitation loss of lubricating oil by the rolling elements is increased. As a result, there is an apprehension about the loss of torque.

### SUMMARY OF THE INVENTION

A cage for a rolling bearing according to one aspect of the invention is disposed in an annular space between an outer ring and an inner ring to hold a plurality of rolling elements between the inner ring and the outer ring so that the rolling elements rolls. The cage includes a first portion and a second portion that are disposed respectively at both ends in an axial direction of the cage, and a plurality of columns which couples the first annular portion and the second annular portion to each other, and which forms a plurality of pockets in which the rolling elements are accommodated. The cage is composed of a first body portion and a second body portion that are arranged in the axial direction of the bearing. The first body portion is coupled to the second body element via interlocking columns provided on each of the first and second body portions. At least one of the body portions has an outer diameter face in which an oil groove having a base end that leads to a corresponding one of the pockets. For example, the oil groove may be formed at an incline with a greater depth at its base end, which leads to the corresponding one of the pockets, and gradually decreases toward a tip side thereof.

According to first aspect of the invention, the double-sided holding type cage is composed of the first body portion and the second body portion that are arranged in the axial direction of the bearing, and that are coupled to each other via interlocking column provided on each of the first and second body portions. The double-sided bearing cage exhibits higher holding rigidity for the rolling elements than the single-sided holding type cage, and is suited for high-speed rotation. In particular, at least one of the body portions has the outer diameter face having the oil groove recessed therein. Therefore, during rotation of the bearing, lubricating oil that has flowed into the corresponding one of the pockets from an inner diameter side of the cage flows to an outer diameter side due to the effect of a centrifugal force, and then is smoothly discharged through the oil groove. In a manner as described above, the flow of lubricating oil in the pockets may be facilitated.
Thus, the agitation loss of lubricating oil can be reduced to suppress the loss of torque favorably.

In the foregoing first aspect of the invention, the pockets of the cage for the bearing may be formed in a generally quadrangular shape with four sides that contact the outer peripheral faces of balls used as the rolling elements, and the oil groove may be provided radially from a corner portion of the corresponding one of the pockets. According to this construction, lubricating oil that has flowed into the corresponding one of the pockets can be more smoothly discharged through the oil groove provided radially from the corner portion of the corresponding one of the pockets. Thus, agitation loss of lubricating oil is significantly reduced.

In the foregoing first aspect of the invention, the outer diameter face of at least one of the first body portion and the second body portion of the cage for the bearing may have formed thereon a projection that projects toward an inner diameter face of the outer ring. According to this construction, even when the outer diameter of the cage increases due to centrifugal force and the projections formed on the outer diameter face of the body portion comes into contact with the inner diameter face of the outer ring during rotation of the bearing, a gap is always ensured between the outer diameter face of the body portion and the inner diameter face of the outer ring. Thus, lubricating oil that has been discharged through the oil groove can be favorably discharged to the outside of the rolling bearing through the gap.

### BRIEF DESCRIPTION OF THE DRAWINGS

The foregoing and further features and advantages of the invention will become apparent from the following description of an example embodiment with reference to the accompanying drawings, wherein like numerals are used to represent like elements and wherein:
FIG 1 is a sectional view showing a deep-grooved ball bearing that includes a cage according to the first embodiment of the invention;
FIG 2 is a sectional view showing on an enlarged scale an inner ring, an outer ring, and a rolling element of the deep-grooved ball bearing and a cage when assembled;
FIG. 3 is a perspective view showing part of the cage on an enlarged scale;
FIG 4 is a sectional view taken along a line IV-IV of FIG 3;
FIG 5 is a sectional view taken along a line V-V of FIG 3;
FIG. 6 is a sectional view, showing oil grooves recessed in outer diameter faces of a first body portion and a second body portion;
FIG 7 is an illustrative view showing a mode of implementing the invention in which the oil grooves in the outer diameter faces of the first body portion and the second body portion are so formed as to extend in parallel from both circumferential side portions of pockets in a circumferential direction and gradually narrow down from a base end side toward a tip side;
FIG. 8 is an illustrative view showing another mode of implementing the invention in which the oil grooves in the outer diameter faces of the first body portion and the second body portion are so formed as to extend in parallel from both the circumferential side portions of the pockets in the circumferential direction and remain equal in width from the base end side to the tip side;
FIG 9 is an illustrative view showing still another mode of implementing the invention in which the oil grooves in the outer diameter faces of the first body portion and the second body portion are so formed as to be inclined from both the circumferential side portions of the pockets in the circumferential direction and gradually narrow down from the base end side toward the tip side; and
FIG. 10 is a transverse sectional view showing the oil grooves of the outer diameter faces of the first body portion and the second body portion.

### DETAILED DESCRIPTION OF EXAMPLE EMBODIMENT

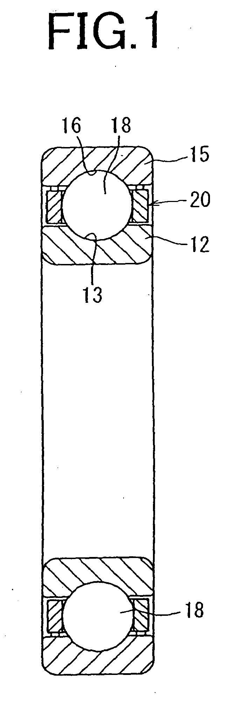

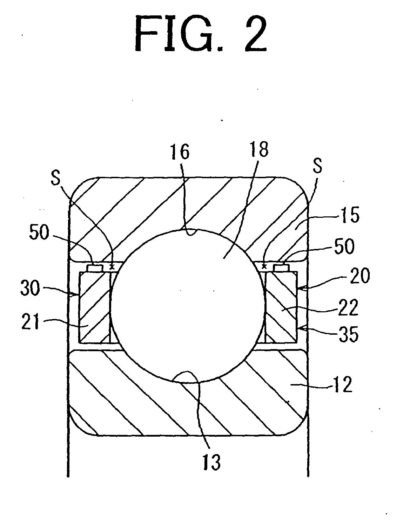

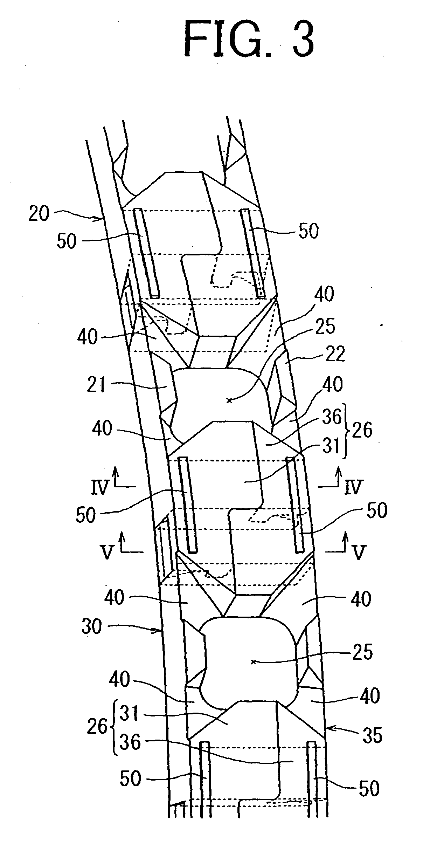

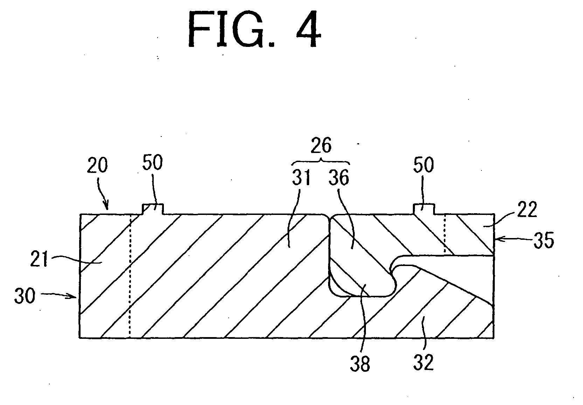

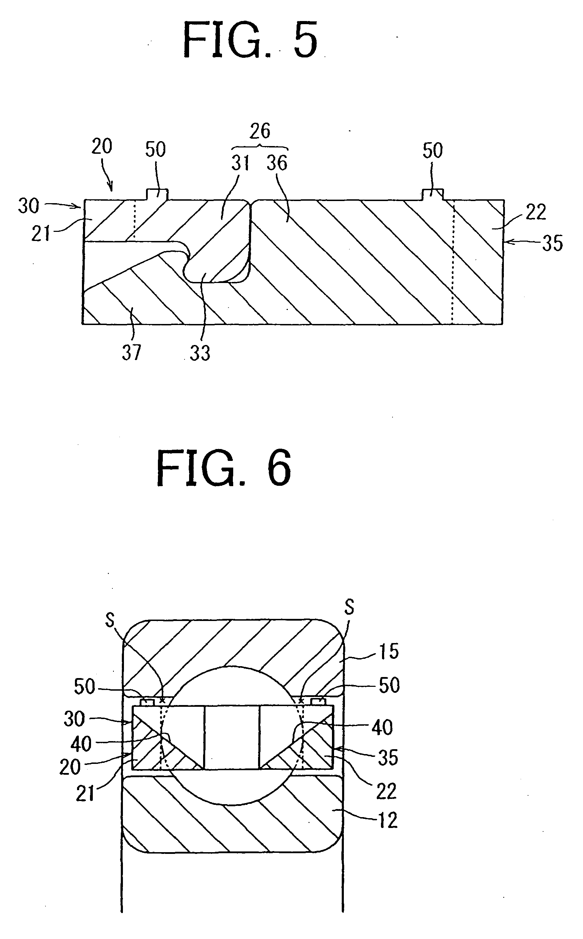

The first embodiment of the invention will be described with reference to FIGS. 1 to 6. FIG. 1 is a sectional view showing a deep-grooved ball bearing that incorporates a cage for a rolling bearing according to the first embodiment of the invention. FIG. 2 is a sectional view showing on an enlarged scale the assembled state of an inner ring, an outer ring, and a rolling element of the deep-grooved ball bearing and the cage. FIG. 3 is a perspective view showing part of the cage on an enlarged scale. FIG. 4 is a sectional view taken along a line IV-IV of FIG 3. FIG 5 is a sectional view taken along a line V-V of FIG 3. FIG. 6 is a sectional view showing oil grooves recessed in outer diameter faces of a first body portion and a second body portion.

As shown in FIGS. 1 and 2, in the first embodiment of the invention exemplifying a case where the rolling bearing is the deep-grooved ball bearing, a plurality of balls 18 are used as rolling elements and arranged between a track face 13 formed on an outer diameter face of an inner ring 12 and a track face 16 formed on an inner diameter face of an outer ring 15. A cage 20 that holds the plurality of the balls 18 is built in an annular space between the inner ring 12 and the outer ring 15.

As shown in FIGS. 2 and 3, the cage 20 includes first annular portion 21 and a second annular portion 22 that are disposed respectively at either end of the bearing in an axial direction thereof, and a plurality of columns 26 that couples the first annular portion 21 and the second annular portion 22 to each other and that forms a plurality of pockets (spaces) 25 in which the plurality of the balls 18 are accommodated and arranged in a circumferential direction at intervals of a predetermined distance.

The cage 20 is composed of a first body portion 30 and a second body portion 35 that are arranged in the axial direction of the bearing and that are coupled to each other via interlocking columns provided on each of the first and second body portions. That is, the first body portion 30 integrally has the first annular portion 21 and first column portions 31 on one side of the columns 26 in the axial direction, and the second body portion 35 integrally has the second annular portion 22 and second column portions 36 on the other side of the columns 26 in the axial direction. The first body portion 30 and the second body portion 35 are both formed through injection molding of a synthetic resin material exhibiting abrasion resistance and heat resistance. As shown in FIGS. 4 and 5, coupling portions 32 and 37 and engaging portions 33 and 38, which are mutually elastically engaged to hold the first body portion 30 and the second body portion 35 in a coupled state, are formed as parts of each of the first column portions 31 and each of the second column portions 36. The coupling portions 32 and 37 and the engaging portions 33 and 38 of each of the first column portions 31 and each of the second column portions 36 have a structure similar to that described in Japanese Patent Application Publication No. 2006-292097 (JP-A-2006-292097). Therefore, details of this structure will not be described below.

As shown in FIGS. 3 and 6, the base ends of the oil grooves 40 lead to the pockets 25 respectively are recessed in outer diameter faces of the first body portion 30 and the second body portion 35 respectively. Each oil groove 40 is formed at an incline with a greater depth at its base end side. The depth of the oil groove 40 gradually decreases as it proceeds toward the tip side of the groove. In other words, each oil groove 40 is formed having sufficient depth to ensure a wide opening cross-sectional area at its base end, which leads to a corresponding one of the pockets 25, and with a depth that decreases with increasing in distance from the corresponding one of the pockets 25 to ensure that a cross-sectional area at the tip side of the groove is narrower than a cross-sectional area at the base end of the groove. However, each oil groove 40 may be so constructed as to remain equal in depth from the base end side thereof to the tip side thereof. In the first embodiment of the invention, each pocket 25 is formed generally in a quadrangular shape with four sides with which an outer peripheral face of a corresponding ball bearing 18 is in contact. Each oil groove 40 is provided to extend in a direction between the circumferential direction of the cage and the axial direction of the cage from a corresponding one of corner portions of the pockets 25. Each oil groove 40 constitutes an inclined groove in which the base end of the groove is located at or close to an inner diameter end of a corresponding one of the columns 26 with a great depth, and the tip side thereof with a depth that gradually decreases toward a lateral face of the first annular portion 21 or the second annular portion 22.

In the first embodiment of the invention, as shown in FIGS. 2 and 3, a plurality of projections 50 that project toward the inner diameter face of the outer ring 15 are formed on outer diameter faces of the first body portion 30 and the second body portion 35. The shape, size, mode of arrangement, and the like of the projections 50 may be appropriately set. In order to avoid interfering with the discharge of lubricating oil, it is desirable to avoid forming the projections 50 in the shape of an endless annular ring that extends continuously in the circumferential direction of the cage 20, and dispose the projections 50 discretely or in a scattered manner in the circumferential direction of the cage 20.

The cage 20 for the rolling bearing according to the first embodiment of the invention is a double-sided holding type cage 20 composed of the first body portion 30 and the second body portion 35. Thus, this cage 20 exhibits greater holding rigidity for the ball bearings 18 than the single-sided holding cage, and is suited for high-speed rotation. When the bearing rotates, lubricating oil that has flowed into the pockets 25 from holes formed on the inner diameter side of the cage 20 flows toward the outer diameter side due to centrifugal force. Some of the lubricating oil that has flowed into the pockets 25 flows into the oil grooves 40 disposed at the respective corner portions of the pockets 25, and flows along these oil grooves 40 to be discharged. Thus, the lubricating oil that has flowed into the pockets 25 is efficiently and smoothly discharged. As a result, the agitation loss of lubricating oil is reduced, and a great effect is achieved in reducing the loss of torque. In the first embodiment of the invention, moreover, each oil groove 40 provided on an outer circumferential surface of the cage 20 to extend in a direction between the circumferential direction of the cage 20 and the axial direction of the cage 20 from the corner portions of the pockets 25 is an inclined groove formed such that the base end of the oil groove 40 is located at or close to the inner diameter end of a corresponding column 26 which decreases in depth toward the tip of the oil groove 40 at the end face of the first annular portion 21 or the second annular portion 22. Thus, the portion of the lubricating oil that has flowed into the pockets 25 from the inner diameter side of the cage 20 is guided to the oil grooves 40, and smoothly flows toward the outer diameter side to be discharged.

In the first embodiment of the invention, as shown in FIGS. 2 and 6, the projections 50 projecting toward the inner diameter face of the outer ring 15 are formed on the outer diameter faces of the first body portion 30 and the second body portion 35. Thus, even if the outer diameter of the cage 20 increases, although only slightly, due to the effect of centrifugal force and the projections 50 of the first body portion 30 and the second body portion 35 come into contact with the inner diameter face of the outer ring 15 (the inner diameter faces on both lateral portions of the track face 16) during rotation of the bearing, a gap S can always be ensured between the outer diameter face of the cage 20 and the inner diameter face of the outer ring 15. As a result, the lubricating oil is discharged from the pockets 25 to the outside of the deep-grooved ball bearing, through the oil grooves 40 and the gap S. In the first embodiment of the invention, however, the tip of each oil groove 40 opens to the end face of the first annular portion 21 or the second annular portion 22. Therefore, even when the outer diameter face of the cage 20 comes into contact with the inner diameter face of the outer ring 15, the tip of each oil groove 40 always opens to the end face of the first annular portion 21 or the second annular portion 22. Accordingly, the accumulation of lubricating oil is prevented even if the projections 50 are not provided on the outer diameter faces of the first body portion 30 and the second body portion 35.

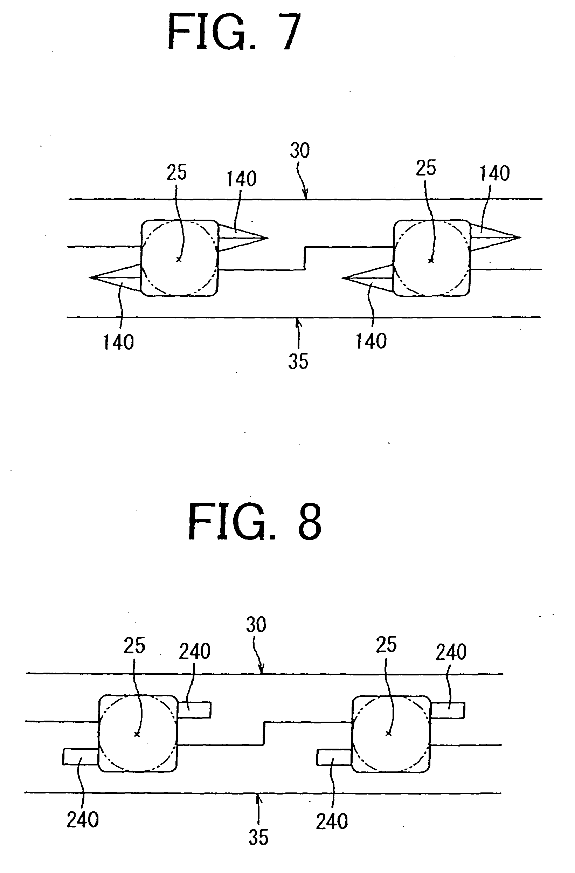

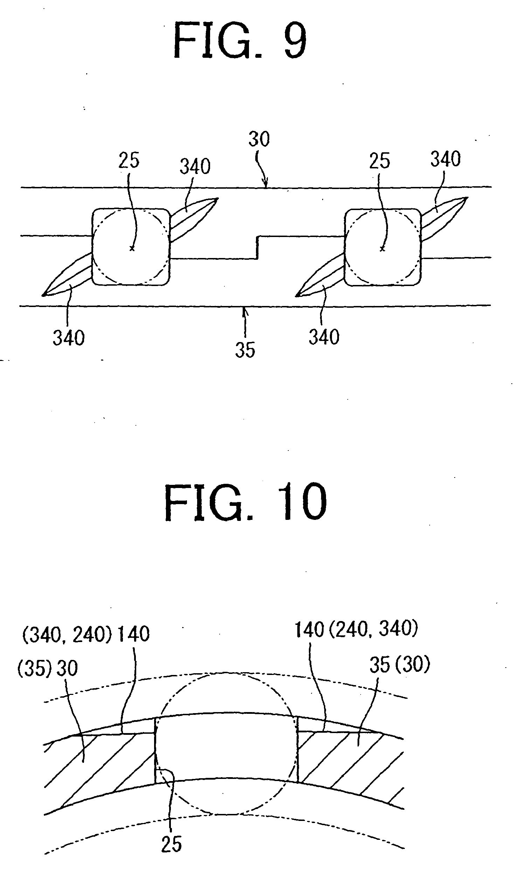

The invention is not limited to the above-described embodiment, but may be implemented in various forms without departing from the scope thereof. For example, in first embodiment of the invention, the four oil grooves 40 are provided to extend in a direction between the circumferential direction and the axial direction of the cage from the corner portions of the pockets 25 of the outer diameter faces of the first body portion 30 and the second body portion 35. However, the number of the oil grooves 40 to be arranged, and the shape, length, groove width and the like of the oil grooves 40 may be set as necessary. For example, as shown in FIGS. 7 and 8, oil grooves 140 (240) of a predetermined length may be so formed as to extend parallel with the circumferential direction from both circumferential edge portions of the pockets 25 of the outer diameter faces of the first body portion 30 and the second body portion 35 respectively. As shown in FIG. 9, the oil grooves 340 may also be formed obliquely.

As shown in FIGS. 7 and 9, each oil groove 140 (340) may be formed to have width that is greater at its base end, which leads to a corresponding one of the pockets 25, and gradually decreases toward its tip side. As shown in FIG 8, the width of each oil groove 240 may also remain equal from its base end side, which leads to a corresponding one of the pockets 25, to its tip side. However, each of the oil grooves 140, 240, and 340 shown in FIGS. 7 to 9 is formed, as shown in FIG 10, at an incline with a greater depth at its the base end side that gradually decreases toward the tip of the oil groovea 140, 240, and 340. That is, embodiments of the invention may be implemented such that each of the oil grooves 40 (140, 240, 340) is recessed in the outer diameter face of at least one of the first body portion 30 and the second body portion 35 and formed in an inclined manner with a depth that is great on the base end side thereof, which leads to a corresponding one of the pockets 25, and gradually decreases toward the tip side thereof.

In each of the oil grooves 140, 240, and 340 shown in FIGS. 7 to 9, to ensure a gap is present between the outer diameter face of the cage 20 and the inner diameter face of the outer ring 15, it is desirable to form the projections 50 described in the first embodiment of the invention on the outer diameter face of at least one of the first body portion 30 and the second body portion 35. In the case described in the first embodiment of the invention, the rolling bearing is a deep-grooved ball bearing. However, the cage according to the invention may also be used in bearings other than deep-grooved ball bearings, such as rolling ball bearings or roller bearings.

## Claims

1. A cage for a bearing comprising:
a holding portion (20) disposed in an annular space between a inner ring (12) and an outer ring (15) that holds a plurality of rolling elements (18) between the inner ring (12) and the outer ring (15) so that the rolling elements rolls,
wherein
the holding portion (20) includes a first annular portion (21) and a second annular portion (22) that are disposed respectively at either end of the holding portion in an axial direction of the cage, and a plurality of columns (26) which couples the first annular portion (21) and the second annular portion (22) to each other and which forms a plurality of pockets (25), in which the rolling elements (18) are accommodated, the plurality of the columns (26) being disposed in a circumferential direction of the holding portion,
the plurality of the columns (26) are constituted by a first column portion (31) and a second column portion (36) that are disposed adjacent to each other in the axial direction of the annular holding portion and coupled to each other, and
an oil groove (40) is formed in an outer diameter face of at least one of the first column portion (31) and the second column portion (36), wherein the oil groove (40) is recessed in the outer diameter face, and a base end of the oil groove leads to a corresponding pocket (25).

2. The cage according to claim 1, wherein
the oil groove (40) is formed at an incline with a greater depth at its base end side and the depth of the oil groove gradually decreases towards its tip side.

3. The cage according to claim 2, wherein
the oil groove (40) has a greater width at its base end side and the width of the oil groove gradually decreases toward its tip side.

4. The cage according to claim 1, wherein
the oil groove (40) is formed with a cross-sectional area that is larger at its base end than at its tip side.

5. The cage according to claim 4, wherein
the oil groove (40) is formed with the cross-sectional area that gradually decreases from its base end toward its tip side.

6. The cage according to any one of claims 1 to 5, wherein
balls (18) are used as the rolling elements;
the pockets (25) are formed in a generally quadrangular shape, the four sides of which contact the outer peripheral faces of the balls, and
the oil groove (40) extends in a direction between the circumferential direction of the cage and the axial direction of the cage from at least one of corner portions of the corresponding pocket (25).

7. The cage according to claim 6, wherein
the oil groove (40) is formed in each of the first column portion (31) and the second column portion (36), and extends in a direction between the circumferential direction of the cage and the axial direction of the cage from the corner portion of the corresponding pocket (25).

8. The cage according to claim 6, wherein
the first column portion (31) and the second column portion (36) have a first lateral face adjacent to the other column portion, and a second lateral face facing in a direction opposite to the first lateral face, respectively, and
the oil groove (40) extends toward the second lateral face of each of the column portions in which the oil groove is formed.

9. The cage according to any one of claims 1 to 5, wherein
the oil groove (40) extends in the circumferential direction of the holding portion (20).

10. The cage according to any one of claims 1 to 9, wherein
a projection (50) that projects toward an inner diameter face of the outer ring is formed in an outer diameter face of at least one of the first column portion (31) and the second column portion (36).

11. A rolling bearing comprising:
a inner ring (12);
a outer ring (15);
a plurality of rolling elements (18) disposed between the inner ring (12) and the outer ring (15); and
a holding portion (20) disposed in an annular space between the inner ring (12) and the outer ring (15) that holds the plurality of the rolling elements (18) between the inner ring (12) and the outer ring (15) so that the rolling elements rolls, wherein
the holding portion (20) includes a first annular portion (21) and a second annular portion (22) that are disposed respectively at either end of the holding portion (20) in an axial direction of the cage, and a plurality of columns (26) that couples the first annular portion (21) and the second annular portion (22) to each other and forms a plurality of pockets (25) in which the rolling elements (18) are accommodated, the plurality of the columns (26) being disposed in a circumferential direction of the holding portion,
the plurality of the columns (26) are constituted by a first column portion (21) and a second column portion (22) that are disposed adjacent to each other in the axial direction of the holding portion and coupled to each other, and
an oil groove (40) is formed in an outer diameter face of at least one of the first column portion (21) and the second column portion (22), wherein the oil groove (40) is recessed in the outer diameter face, and a base end of the oil groove (40) leads to the corresponding pocket (25).

12. The rolling bearing according to claim 11, wherein
the oil groove (40) is formed at an incline with a greater depth at its base end and the depth gradually decreases toward the tip side of the oil groove.

13. The rolling bearing according to claim 11, wherein
a cross-sectional area of the oil groove (40) is greater at its base end side than at its tip side.
